(19) Europäisches Patentamt / European Patent Office / Office européen des brevets

(11) **EP 4 475 430 A2**

(12) **DEMANDE DE BREVET EUROPEEN**

(43) Date de publication:
**11.12.2024 Bulletin 2024/50**

(51) Classification Internationale des Brevets (IPC):
**H02S 50/10** *(2014.01)* **H02S 50/15** *(2014.01)*

(21) Numéro de dépôt: **24178316.6**

(52) Classification Coopérative des Brevets (CPC):
**H02S 50/15; H02S 50/10**

(22) Date de dépôt: **27.05.2024**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **06.06.2023 FR 2305689**

(71) Demandeur: **Commissariat à l'Energie Atomique et aux Energies Alternatives
75015 Paris (FR)**

(72) Inventeurs:
• **BONINO, Olivier**
  **38054 GRENOBLE CEDEX 09 (FR)**
• **FAVRE, Wilfried**
  **38054 GRENOBLE CEDEX 09 (FR)**
• **ZOGBO, Senami**
  **38054 GRENOBLE CEDEX 09 (FR)**

(74) Mandataire: **Brevalex
Tour Trinity
1 B Place de la Défense
92400 Courbevoie (FR)**

(54) **PROCEDE DE CARACTERISATION ELECTRIQUE D'UN MATERIAU ABSORBEUR SOUS ILLUMINATION VARIABLE**

(57) Procédé de caractérisation électrique d'un échantillon photovoltaïque (100) comprenant une couche de matériau absorbeur (112) et N paires d'électrodes adjacentes (108.1 - 108.4), comprenant :

a) définition ou calcul d'une valeur cible $d_s^{PL\,cible}$ de densité surfacique de photoluminescence des régions de l'échantillon entre les électrodes ;

b) pour chaque paire d'électrodes adjacentes, détermination d'une valeur $I_i^{d_s^{PL\,cible}}$ d'une intensité d'illumination telle qu'une valeur $d_{s_i}^{PL}$ de densité surfacique de photoluminescence entre les électrodes soit la plus proche possible de $d_s^{PL\,cible}$ ;

c) pour chaque paire d'électrodes adjacentes, mesure d'une résistance électrique $R_{d_s^{PL\,cible}}^{paire}$ entre les électrodes avec une illumination d'intensité $I_i^{d_s^{PL\,cible}}$ ;

d) détermination d'une valeur $R_{Sh}$ de résistance de couche de la couche de matériau absorbeur et d'une valeur $R_c$ de résistance de contact d'une des électrodes avec la couche de matériau absorbeur, par interpolation linéaire (méthode TLM) entre au moins deux des valeurs $R_{d_s^{PL\,cible}}^{paire}(d_i)$.

FIG. 1

**Description**

## DOMAINE TECHNIQUE

L'invention concerne le domaine de la caractérisation électrique d'un matériau absorbeur, c'est-à-dire un matériau de conversion photovoltaïque apte à être utilisé pour la réalisation de cellules photovoltaïques. L'invention peut être utilisée pour caractériser par exemple des structures photovoltaïques à base de silicium cristallin, avec des contacts passivés et à hautes performances. L'invention peut notamment servir à déterminer les pertes résistives obtenues dans des cellules photovoltaïques en fonctionnement, c'est-à-dire sous illumination, réalisées avec le matériau absorbeur ainsi caractérisé.

## ÉTAT DE LA TECHNIQUE ANTÉRIEURE

Plusieurs techniques ont été développées pour cartographier les performances d'une cellule photovoltaïque, c'est-à-dire caractériser électriquement différentes régions de la cellule photovoltaïque.

Les mesures courant-tension (mesures I-V), à l'obscurité ou sous illumination, sont couramment utilisées pour évaluer les performances des cellules photovoltaïques ou d'éléments de ces cellules, et comprendre les phénomènes à l'origine de certaines limitations des performances des cellules. Une telle mesure I-V appliquée à une cellule photovoltaïque consiste à mesurer le courant électrique délivré par la cellule tout en appliquant une tension électrique à ses bornes. Cette mesure permet notamment de déterminer le courant de court-circuit, la tension de circuit-ouvert, ainsi que le courant et la tension à la puissance maximale de la cellule photovoltaïque.

La méthode de mesure « Transfer Length Method », ou TLM, également appelée « méthode de longueur de transfert », permet de déterminer la conductivité d'une couche de matériau et la résistivité de contact entre cette couche de matériau et des électrodes de mesure conductrices formées sur cette couche de matériau. Cette méthode est mise en oeuvre à partir d'un échantillon photovoltaïque comprenant au moins une couche de matériau absorbeur (le même que celui utilisé pour réaliser la cellule photovoltaïque) sur lequel sont disposées plusieurs électrodes de mesure conductrices. Les électrodes de mesure sont par exemple de forme allongée, disposées parallèlement les unes aux autres et espacées d'une distance variable les unes par rapport aux autres, c'est-à-dire telles que les distances entre deux électrodes de mesure voisines, ou adjacentes, soient différentes d'une paire d'électrodes de mesure à l'autre. Ces distances sont appelées distances inter-électrodes.

Dans la méthode TLM, des mesures I-V pour les différentes paires d'électrodes voisines sont réalisées. Il est alors possible de déterminer les valeurs de résistance pour ces différentes paires d'électrodes en fonction de la distance inter-électrodes de chacune de ces paires d'électrodes, puis d'extraire les valeurs de la conductivité électrique de la couche de matériau absorbeur et de la résistance de contact entre cette couche de matériau absorbeur et les électrodes de mesure.

La mise en oeuvre de la méthode TLM nécessite de réaliser des électrodes de mesure conductrices à la surface de l'échantillon à caractériser, ces électrodes étant très souvent métalliques. Cette méthode est généralement pratiquée à l'obscurité. Cependant, les couches photosensibles et les résistivités de contact de l'échantillon caractérisé peuvent être affectées par la présence d'une excitation lumineuse. Pour obtenir une meilleure précision, la caractérisation électrique de tels échantillons devrait donc être réalisée sous illumination. Par contre, les électrodes de mesure utilisées génèrent de l'ombrage lorsque l'échantillon est placé sous illumination, entraînant ainsi une inhomogénéité dans la répartition des porteurs de charge photo-générés dans la couche photovoltaïque de l'échantillon étudié étant donné que les distances inter-électrodes varient d'une paire d'électrodes de mesure à l'autre. La méthode TLM classique ne permet donc pas d'obtenir des résultats corrects sous illumination.

Dans l'article «In depth analysis of transfer length method application on passivated contacts under illumination » de L. Basset et al., Solar Energy Materials and Solar Cells, Vol. 230, 2021, Février 2021, les auteurs mettent en évidence, par simulation numérique et mesures expérimentales, que des inhomogénéités dans la concentration spatiale des porteurs minoritaires en excès principalement dues à l'ombrage des électrodes métalliques ne permettent plus d'appliquer correctement la méthode TLM à des couches de matériau absorbeur à base de silicium cristallin passivées pour les raisons suivantes :

- la résistivité du silicium cristallin est fortement dépendante de la densité de porteurs minoritaires sous illumination : pour chaque niveau d'éclairement, la résistivité du c-Si doit être homogène et connue ;
- dans le cas des résultats de simulation sur des échantillons photovoltaïques à base de silicium cristallin dopé n, il a été vu que sous un éclairement d'intensité égale à 1 soleil (ou 1 sun), soit 1000 W/m$^2$, en face avant, aucune photo-génération ne se produit sous les électrodes métalliques, menant ainsi à une inhomogénéité de porteurs injectés selon l'axe parallèle à la longueur des électrodes puisque celles-ci créent de l'ombrage. Selon l'axe parallèle à l'épaisseur de la couche de matériau absorbeur, il existe également des inhomogénéités mais celles-ci sont suffisamment faibles par rapport à l'épaisseur de l'échantillon pour être homogénéisées par le phénomène de diffusion.

Lorsque la mesure TLM est pratiquée sous un éclairement continu fixe (exemple sous un spectre solaire normalisé de type AM 1.5), le taux d'ombrage effectif moyen est plus élevé pour les faibles distances inter-électrodes que pour les grandes distances inter-électrodes. Les densités de porteurs de charge photo-générés sont donc plus faibles pour les électrodes faiblement espacées que pour les électrodes espacées par de plus grandes distances. Cela conduit à une conductivité de couche variable selon la paire d'électrodes considérée, ce qui ne permet pas d'appliquer correctement la méthode TLM lorsque l'échantillon est sous illumination. Lorsque l'échantillon photovoltaïque est éclairé depuis sa face arrière (face opposée à la face avant sur laquelle les électrodes sont disposées), des problèmes de variabilité de conductivité de couche apparaissent également en raison des variations de réflexion engendrées par les électrodes.

**EXPOSÉ DE L'INVENTION**

Un but de la présente invention est de proposer un procédé de caractérisation électrique d'un échantillon photovoltaïque permettant de caractériser correctement cet échantillon photovoltaïque sous illumination.

Pour cela, l'invention propose un procédé de caractérisation électrique d'un échantillon photovoltaïque comprenant au moins un empilement de couches incluant une couche de matériau absorbeur et des électrodes de mesure de forme et de dimensions identiques et disposées sur une première face de l'échantillon photovoltaïque et formant $N$ paires d'électrodes de mesure adjacentes présentant des distances inter-électrodes $d_1$ - $d_N$ différentes les unes des autres, avec $N$ nombre entier supérieur ou égal à 2, les électrodes de mesure d'une même paire d'électrodes de mesure adjacentes étant parallèles l'une par rapport à l'autre, comprenant au moins :

a) définition ou calcul d'une valeur cible $d_s^{PL\,cible}$ de densité surfacique d'un signal de photoluminescence destiné à être émis depuis des régions de l'échantillon photovoltaïque localisées entre les électrodes de mesure de chacune des $N$ paires d'électrodes de mesure adjacentes ;

b) pour chacune des $N$ paires d'électrodes de mesure adjacentes, de distance inter-électrodes $d_i$ avec $i$ un nombre entier compris entre 1 et $N$, détermination d'une valeur $I_i^{d_s^{PL\,cible}}$ d'une intensité lumineuse, pour un spectre donné $S^{PL}$ illuminant une face, correspondant à la première face de l'échantillon photovoltaïque ou à une deuxième face, opposée à la première face, de l'échantillon photovoltaïque, telle qu'une valeur $d_{s_i}^{PL}$ de densité surfacique d'un signal de photoluminescence émis depuis la région de l'échantillon photovoltaïque localisée entre les électrodes de mesure adjacentes présentant la distance inter-électrodes $d_i$, soit la plus proche possible de la valeur cible $d_s^{PL\,cible}$ ;

c) pour chacune des $N$ paires d'électrodes de mesure adjacentes, de distance inter-électrodes $d_i$, mesure d'une résistance électrique $R_{d_s^{PL\,cible}}^{paire}(d_i)$ entre les électrodes de mesure adjacentes présentant la distance inter-électrodes $d_i$, pendant une illumination de ladite face de l'échantillon photovoltaïque avec le spectre $S^{PL}$ appliqué avec l'intensité lumineuse $I_i^{d_s^{PL\,cible}}$ ;

d) détermination d'une valeur $R_{Sh}$ de résistance de couche de la couche de matériau absorbeur et d'une valeur $R_c$ de résistance de contact d'une des électrodes de mesure avec la couche de matériau absorbeur, par interpolation linéaire entre au moins deux des valeurs $R_{d_s^{PL\,cible}}^{paire}(d_i)$ mesurées à l'étape c).

Contrairement à une mesure TLM classique dans laquelle la même illumination (intensité et caractéristiques spectrales) est appliquée sur toutes les zones de l'échantillon faisant l'objet de la mesure TLM, le procédé proposé adapte l'illumination lors des mesures de résistance électrique réalisées pour chacune des N paires d'électrodes de mesure adjacentes afin d'obtenir une valeur de densité surfacique du signal de photoluminescence émis depuis les régions de l'échantillon photovoltaïque localisées entre les électrodes de chacune des $N$ paires d'électrodes de mesure adjacentes qui soit la plus proche possible de la valeur cible $d_s^{PL\ cible}$ définie ou calculée préalablement aux mesures.

L'illumination est adaptée en modifiant l'intensité lumineuse avec laquelle l'échantillon photovoltaïque est illuminé pendant les mesures des résistances électriques $R_{d_s^{PL\ cible}}^{paire}(d_i)$ entre les électrodes de mesure pour chacune des paires d'électrodes de mesure.

Ce procédé propose donc d'ajuster de façon volontaire l'illumination de l'échantillon photovoltaïque pour chacune des mesures de résistance électrique réalisées pour chaque paire d'électrodes de mesure adjacentes, afin d'obtenir, pour les différentes paires d'électrode de mesure adjacentes, une densité surfacique de signal de photoluminescence généré identique ou quasi-identique, ou une densité de porteurs photo-générés identique ou quasi-identique, ou une résistance de couche équivalente ou une résistivité électrique équivalente identique ou quasi-identique, dans la couche de matériau absorbeur.

La résistance de contact et la résistance de couche équivalente peuvent être calculées, à l'étape d), à partir des équations de la méthode TLM, avec les valeurs de résistance électrique obtenues sous illumination adaptée à l'étape c). Ce procédé permet ainsi de compenser tout ou partie de l'influence de l'ombrage des électrodes de mesure (lorsque l'échantillon est illuminé à travers sa première face) et/ou des réflexions de l'illumination sur les électrodes de mesure (lorsque l'échantillon est illuminé à travers sa deuxième face) qui modifient localement la densité de porteurs photo-générés ou la résistance de couche équivalente dans la couche de matériau absorbeur.

Le procédé proposé apporte aussi une relation, pour chaque paire d'électrodes de mesure et chaque zone inter-électrodes, entre :

- la résistance de contact et la résistance de couche estimées ;
- la densité de signal photoluminescent ;
- les conditions de mesures suivantes : dimensions des électrodes de mesure, espace inter-électrodes, face de prise de contact, face d'illumination ;
- l'illumination appliquée pendant les mesures.

Le matériau absorbeur peut correspondre à au moins un matériau pouvant être un constituant d'un composant ou dispositif photovoltaïque, comme par exemple du semi-conducteur amorphe ou cristallin, un oxyde transparent conducteur, un matériau pérovskite, etc. Le matériau absorbeur correspond à un matériau photosensible, absorbeur de lumière, ayant des propriétés de conduction qui varient sous éclairement grâce à la génération de porteurs de charge par cet éclairement.

La ou les couches de l'empilement éventuellement disposées entre la face de l'échantillon destinée à être illuminée et la couche de matériau absorbeur sont telles qu'elles permettent le passage d'au moins une partie du spectre lumineux $S^{PL}$ utilisé pour illuminer l'échantillon photovoltaïque.

Dans ce procédé, il est fait l'hypothèse que la contribution des couches de l'empilement autres que la couche de matériau absorbeur à la densité surfacique du signal de photoluminescence destiné à être émis depuis les régions de l'échantillon photovoltaïque localisées entre les électrodes de mesure de chacune des N paires d'électrodes de mesure adjacentes, dont la valeur cible $d_s^{PL\ cible}$ est définie ou calculée à l'étape a), est négligeable.

Dans l'ensemble du document, la résistance de contact $R_c$ d'une des électrodes de mesure avec la couche de matériau absorbeur inclut aussi la résistance électrique de la ou des différentes couches constituants les électrodes ainsi que les contributions résistives des résistances de contact entre ces différentes couches. Il est de même pour la résistivité de contact spécifique.

Les électrodes de mesure sont avantageusement de forme allongée.

A l'étape c), les valeurs $R_{d_s^{PL\ cible}}^{paire}(d_i)$ des résistances électriques peuvent être mesurées par un dispositif de mesure I-V apte à réaliser les mesures I-V en injectant un courant de mesure à travers deux électrodes de mesure adjacentes et en mesurant la tension obtenue entre ces électrodes, ou en appliquant une tension entre deux électrodes de mesure adjacentes et en mesurant le courant circulant entre ces électrodes. Les mesures I-V réalisées pour obtenir les valeurs $R_{d_s^{PL\ cible}}^{paire}(d_i)$ des résistances électriques peuvent correspondre à des mesures dites « 4 fils». L'équipement utilisé pour réaliser ces mesures de résistance électrique est par exemple une unité de source et de mesure SMU.

La valeur cible $d_s^{PL\ cible}$ peut être calculée à partir d'une valeur cible $R_{sh}^{cible}$ de résistance de couche de la couche de matériau absorbeur ou d'une valeur cible $\Delta p^{cible}$ d'un taux d'injection de porteurs de charge dans la couche de matériau absorbeur.

En particulier, la valeur $R_{sh}^{cible}$ peut être calculée par méthode TLM en illuminant ladite première face de l'échantillon photovoltaïque avec une lumière dont les caractéristiques spectrales et l'intensité sont prédéterminées et d'intérêt, o la valeur $R_{sh}^{cible}$ peut être prédéfinie, c'est-à-dire choisie par l'utilisation dans une plage d'intérêt pour lui.

En variante, la valeur $R_{sh}^{cible}$ peut aussi être obtenue par calcul à partir de la valeur cible $\Delta_p^{cible}$.

Selon un autre mode de réalisation, la valeur cible $d_s^{PL\ cible}$ peut être définie à partir d'une mesure de photoluminescence d'une valeur $d_{s_i}^{PL}$ en illuminant l'échantillon photovoltaïque (100) avec une lumière dont les caractéristiques spectrales et l'intensité sont prédéterminées ; l'illumination de l'échantillon photovoltaïque et la mesure de photoluminescence sont réalisées sur ladite première face.

Selon un autre mode de réalisation, la valeur cible $d_s^{PL\ cible}$ peut aussi être prédéfinie ou choisie.

En effet, la densité de signal de photoluminescence $d_{s_i}^{PL}$ émis depuis la région de l'échantillon photovoltaïque localisée entre les électrodes de mesure adjacentes présentant la distance inter-électrodes $d_i$ peut s'exprimer par l'équation :

$$d_{s_i}^{PL} = K.n.p,$$

avec

K : constante optique dont la valeur dépend des propriétés de l'équipement d'illumination de l'échantillon photovoltaïque utilisé et d'un équipement de mesure du signal de photoluminescence utilisé, ainsi que de l'échantillon photovoltaïque (présence ou non de texturations, de couches antireflets, résolution de l'équipement, etc.) ;
n : la densité d'électrons libres, s'exprimant par l'équation $n = N_D + \Delta n$, avec $N_D$ correspondant à la densité de porteurs de charge de type donneur à l'obscurité dans le matériau absorbeur, en cm$^{-3}$, et $\Delta n$ correspondant à la densité d'électrons générés en excès sous lumière dans le matériau absorbeur ;
p : la densité de trous libres, s'exprimant par l'équation $p = N_A + \Delta p$, avec $N_A$ correspondant à la densité de porteurs de charge de type accepteur dans le matériau absorbeur, en cm$^{-3}$, et de valeur nulle dans le cas d'une couche de semi-conducteur de type n, et $\Delta p$ correspondant à la densité d'électrons générés en excès sous lumière dans le matériau absorbeur.

Lorsque le matériau absorbeur de l'échantillon photovoltaïque est un semi-conducteur de type n, et en illuminant l'échantillon photovoltaïque dans une gamme d'excitation lumineuse telle que $\Delta n = \Delta p$, la densité de signal de photoluminescence $d_{s_i}^{PL}$ mesurée peut donc s'exprimer par l'équation :

$$d_{s_i\ i}^{PL} = K.(N_D + \Delta p).\Delta p$$

Pour un échantillon et des équipements d'illumination et de mesure donnés, les valeurs de K et de $N_D$ sont constantes. Les mesures de photoluminescence de l'échantillon peuvent donc être vues comme des mesures du paramètre $\Delta p$ dans le matériau absorbeur et qui affectent directement la valeur de la résistance de couche de la couche de matériau absorbeur.

Si la valeur mesurée $d_s^{PL\ cible}$ est constante d'un pixel à l'autre ou d'un groupe de pixels à l'autre du spécimen de mesure, cela signifie donc que la valeur du paramètre $\Delta p$ est constante pour ces pixels ou ces différents groupes de pixel.

La valeur $d_{S_i}^{PL}$ de densité surfacique du signal de photoluminescence émis depuis la région de l'échantillon photovoltaïque localisée entre les électrodes de mesure adjacentes présentant la distance inter-électrodes $d_i$, peut être définie comme la somme du signal photoluminescent mesurée sur la surface d'intérêt qui correspond la surface égale à la largeur des électrodes (c'est-à-dire le côté parallèle des électrodes 2 à 2) multipliée par la distance inter-électrode $d_i$.

La valeur cible $d_s^{PL\ cible}$ peut être calculée à partir de la valeur de $N_D$, de la constante $K$ et de la valeur cible $\Delta_p{}^{cible}$. Dans ce cas, la valeur de $N_D$ peut être obtenue par une mesure 4 pointes ou TLM à l'obscurité. La valeur de K peut être déterminée par une calibration du système de mesure par photoluminescence pour chaque type d'échantillon photovoltaïque (la constante K dépend de la transmission de la lumière jusqu'au matériau absorbeur).

En outre, et selon un exemple de mise en oeuvre, la valeur $R_{sh}^{cible}$ peut être obtenue en fonction de celle de $\Delta_p{}^{cible}$ en utilisant les deux équations suivantes :

$$\frac{1}{\rho^{cible}} \sim q\left(\mu_n\left(N_D + \Delta p^{cible}\right) + \mu_p . \Delta p^{cible}\right) \text{ et } R_{sh}^{cible} = \frac{\rho^{cible}}{e}$$

avec $\rho^{cible}$ correspondant à la résistivité électrique, en $\Omega$.cm, de la couche de matériau absorbeur ;
$q$ correspondant à la charge élémentaire, en C ;
$\mu_n$ correspondant à la mobilité des électrons dans le matériau absorbeur, en cm$^2$/(V.s) ;
$\mu_p$ correspondant à la mobilité des trous dans le matériau absorbeur, en cm$^2$/(V.s) ;
$N_D$ correspondant à la densité de porteurs de charge de type donneur à l'obscurité dans le matériau absorbeur, c'est-à-dire la concentration d'atomes dopants actifs dans le matériau absorbeur, en cm$^{-3}$ ;
$\Delta p^{cible}$ correspondant à la valeur prédéterminée du taux d'injection de porteurs de charge cible dans la couche de matériau absorbeur, en cm$^{-3}$ ;
$R_{sh}^{cible}$ correspondant à la valeur cible de la résistance de couche de la couche de matériau absorbeur, en $\Omega/\square$ ;
e correspondant à l'épaisseur de la couche équivalente, c'est-à-dire de la couche de matériau absorbeur, en cm.
A l'étape b), le signal de photoluminescence peut être mesuré par un dispositif de mesure de photoluminescence. Ce dispositif de mesure de photoluminescence peut comporter au moins un capteur CCD.

L'étape a) peut être mise en oeuvre en illuminant l'échantillon photovoltaïque et en mesurant le signal de photoluminescence émis depuis l'une des régions de l'échantillon photovoltaïque localisées entre les électrodes de mesure de chacune des $N$ paires d'électrodes de mesure adjacentes. Lors de l'étape a), l'échantillon photovoltaïque peut être illuminé par un simulateur solaire.
L'étape b) peut être mise en oeuvre :

- en réalisant une cartographie, avec le spectre $S^{PL}$ et sous une illumination d'intensité $I_{carto}$, de la densité surfacique de signal de photoluminescence $d_{S_i}^{PL}$ ($I_{carto}$) de l'échantillon photovoltaïque (100) entre chacune des N paires d'électrodes de mesure adjacentes (108.1 - 108.4), et en calculant les différentes valeurs de $I_i^{d_s^{PL\ cible}}$ permettant d'obtenir la même valeur $d_s^{PL\ cible}$ entre chaque paire d'électrode telle que $\frac{d_{S_i}^{PL}(I_{carto})}{I_{carto}} = \frac{d_s^{PL\ cible}}{I_i^{d_s^{PL\ cible}}}$ ; ou

- par essais successifs ou avec un balayage de différentes valeurs possibles de $I_i^{d_s^{PL\ cible}}$.

La valeur $d_{S_i}^{PL}$ de densité surfacique du signal de photoluminescence émis depuis la région de l'échantillon photovoltaïque localisée entre les électrodes de mesure adjacentes présentant la distance inter-électrodes $d_i$ peut-être mesurée en mesurant le signal de photoluminescence émis depuis la région de l'échantillon photovoltaïque localisée entre les électrodes de mesure adjacentes présentant la distance inter-électrodes $d_i$, et en calculant la valeur $d_{S_i}^{PL}$ de densité surfacique du signal de photoluminescence mesuré photoluminescence émis depuis la région de l'échantillon photovoltaïque localisée entre les électrodes de mesure adjacentes présentant la distance inter-électrodes $d_i$ ;

Afin que la valeur $R_{Sh}$ déterminée à partir des mesures $R_{d_s^{PL\,cible}}^{paire}(d_i)$ présentent une certaine précision, les incertitudes de mesures de $R_{d_s^{PL\,cible}}^{paire}(d_i)$ peuvent être très inférieures, par exemple d'au moins un facteur 10, à $\left| R_{d_s^{PL\,cible}}^{paire}(d_{i+1}) - R_{d_s^{PL\,cible}}^{paire}(d_i) \right|$. L'incertitude de mesure dépend de nombreux paramètres dont les caractéristiques des dispositifs de mesures mais aussi de la précision de la géométrie des électrodes de mesure et de l'écart entre les valeurs de $d_i$ et $d_{i+1}$.

Le procédé peut comporter en outre une étape e) de détermination de valeurs de la résistivité de contact spécifique $\rho_C$ et de la longueur, ou distance, de transfert $L_T$ de la couche de matériau absorbeur à partir des valeurs déterminées $R_{Sh}$ de résistance de couche de la couche de matériau absorbeur et $R_c$ de résistance de contact d'une des électrodes de mesure avec la couche de matériau absorbeur. Les valeurs $\rho_c$ et $L_T$ peuvent être obtenues en résolvant le système d'équations suivant :

$$R_C = \frac{R_{Sh} L_T}{W} \coth\left(\frac{L}{L_T}\right)$$

$$\rho_C = R_{Sh}.L_T^2$$

avec $L_T$ correspondant à la longueur de transfert, en cm ;
$\rho_c$ correspondant à la résistivité de contact spécifique, en $\Omega.cm^2$ ;
$W$ correspondant à la largeur (dimension « perpendiculaire » à la direction du courant circulant entre deux électrodes) d'une des électrodes de mesure, en cm ;
$L$ correspondant à la longueur (dimension « parallèle » à la direction du courant circulant entre deux électrodes) d'une des électrodes de mesure, en cm ;
$R_{Sh}$ correspondant à la résistance de couche de la couche de matériau absorbeur, en $\Omega/\square$ (Ohm par carré);
$R_c$ correspondant à la résistance de contact d'une des électrodes de mesure avec la couche de matériau absorbeur, en $\Omega$.

Lors de l'étape c), les valeurs $R_{d_s^{PL\,cible}}^{paire}(d_i)$ peuvent être mesurées par un dispositif de mesure I-V (courant - tension).

L'échantillon photovoltaïque peut comporter une ou plusieurs couches de matériaux absorbeurs empilées, ainsi que des couches d'autres matériaux permettant de laisser passer tout ou partie du spectre lumineux $S^{PL}$ appliqué sur le matériau absorbeur.

Dans une configuration particulière, la couche de matériau absorbeur peut comporter une couche de semiconducteur cristallin, l'empilement de couches pouvant comporter en outre au moins deux couches de semi-conducteur amorphe entre lesquelles la couche de matériau absorbeur est disposée.

Les électrodes de mesure peuvent comporter un matériau électriquement conducteur, ou un empilement de plusieurs matériaux électriquement conducteurs.

Dans une configuration particulière, chacune des électrodes de mesure peut comporter une portion de métal disposée sur une portion d'oxyde transparent conducteur.

L'invention porte également sur un dispositif de caractérisation électrique d'un échantillon photovoltaïque comprenant au moins un empilement de couches incluant une couche de matériau absorbeur et des électrodes de mesure de forme et de dimension identiques et disposées sur une première face de l'échantillon photovoltaïque et formant $N$ paires d'électrodes de mesure adjacentes présentant des distances inter-électrodes $d_1$ - $d_N$ différentes les unes des autres, avec $N$ nombre entier supérieur ou égal à 2, les électrodes de mesure d'une même paire d'électrodes de mesure adjacentes étant parallèles l'une par rapport à l'autre, configuré pour mettre en oeuvre un procédé de caractérisation tel que décrit ci-dessus.

Ce dispositif peut notamment comporter un dispositif de mesure I-V, par exemple une unité de source et de mesure SMU, un dispositif d'illumination d'intensité variable ainsi qu'une unité de calcul réalisant les différents calculs, interpolations linéaires, etc., du procédé. Le dispositif d'illumination peut correspondre à un simulateur solaire ou une source de lumière multi-longueur d'ondes.

De manière avantageuse, les mesures du signal de photoluminescence peuvent être réalisées par un dispositif de mesure disposant d'une source lumineuse adaptée pour de telles mesures, par exemple un laser émettant une lumière dont la longueur d'onde est bien adaptée pour provoquer le phénomène de photoluminescence dans le matériau absorbeur (émettant par exemple une lumière de longueur d'onde égale à 915 nm lorsque le matériau absorbeur correspond à du silicium cristallin).

En variante, la source lumineuse utilisée lors des mesures du signal de photoluminescence peut être la même que celle utilisée pour illuminer l'échantillon photovoltaïque lors de l'étape a).

Quelle que soit le mode de réalisation ou la variante envisagée, l'illumination de l'échantillon photovoltaïque peut être réalisée sur la première face ou sur la deuxième face de l'échantillon. De même, les mesures de signal de photoluminescence peuvent être réalisées depuis la première face ou la deuxième face de l'échantillon (indépendamment de la face illuminée). Cependant la face depuis laquelle les mesures de photoluminescence sont réalisées reste inchangées pour les étapes a) et b) si des mesures de photoluminescence sont réalisés dans l'étape a). La face illuminée est inchangée lors des étapes b) et c) du procédé de caractérisation.

Dans ce document, les termes « voisine » et « adjacente » sont utilisés indifféremment pour qualifier deux électrodes de mesure disposées l'une à côté de l'autre sans qu'une troisième électrode de mesure soit disposée entre ces deux électrodes de mesure.

Dans l'ensemble du document, le terme « sur » est utilisé sans distinction de l'orientation dans l'espace de l'élément auquel se rapporte ce terme. Par exemple, dans la caractéristique « sur une face d'une couche », cette face n'est pas nécessairement orientée vers le haut mais peut correspondre à une face orientée selon n'importe quelle direction. En outre, la disposition d'un premier élément sur un deuxième élément doit être comprise comme pouvant correspondre à la disposition du premier élément directement contre le deuxième élément, sans aucun élément intermédiaire entre les premiers et deuxième éléments, ou bien comme pouvant correspondre à la disposition du premier élément sur le deuxième élément avec un ou plusieurs éléments intermédiaires disposés entre les premier et deuxième éléments.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

La figure 1 représente schématiquement un exemple d'échantillon photovoltaïque caractérisé électriquement lors de la mise en oeuvre du procédé selon l'invention ;
La figure 2 représente schématiquement les étapes d'un procédé de caractérisation d'un échantillon photovoltaïque, objet de la présente invention ;
La figure 3 représente schématiquement un dispositif de caractérisation d'un échantillon photovoltaïque, également objet de la présente invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

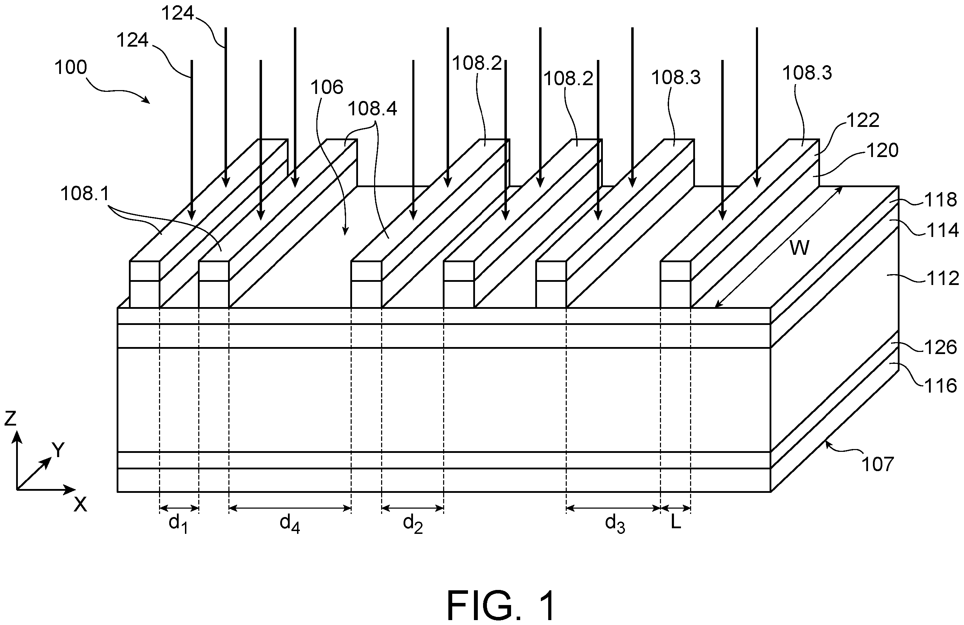

Un exemple d'échantillon photovoltaïque 100 comprenant au moins une couche de matériau absorbeur 112 pour lequel un procédé de caractérisation électrique sous illumination adaptative est mis en oeuvre est décrit ci-dessous en lien avec la figure 1.

L'échantillon 100 peut comporter plusieurs couches afin que celui-ci soit structurellement proche ou identique aux couches utilisées dans une cellule photovoltaïque, comme représenté par exemple sur la figure 1 sur laquelle l'échantillon 100 comporte des couches similaires à celles d'une cellule photovoltaïque à hétérojonction et à contacts passivés. Sur cette figure 1, l'échantillon 100 comporte un substrat semi-conducteur, par exemple à base de silicium cristallin de type n, c-Si(n), et formant la couche de matériau absorbeur 112 de l'échantillon 100. L'épaisseur (dimension parallèle à l'axe Z représenté sur la figure 1) de la couche 112 peut être comprise entre 40 $\mu$m et 400 $\mu$m et est par

exemple égale à environ 160 $\mu$m, et la résistivité électrique de la couche 112 est par exemple proche ou égale à 1 $\Omega$.cm. Les deux faces principales (faces avant et arrière parallèles au plan (X,Y) représenté sur la figure 1) de la couche 112 sont recouvertes par des couches 114 et 126 de silicium amorphe hydrogéné intrinsèque (non intentionnellement dopé), a-Si:H(i). L'épaisseur de chacune des couches 114 et 126 est suffisante pour que chacune d'elle forme une couche de passivation, et peut être comprise entre 2 nm et 50 nm et est par exemple égale à 10 nm. La couche 126 se trouvant du côté de la face arrière de la couche 112 est recouverte par une couche 116 de silicium amorphe hydrogéné dopé p, a-Si:H(p), et la couche 114 se trouvant du côté de la face avant de la couche 112 est recouverte par une couche 118 de silicium amorphe hydrogéné dopé n, a-Si:H(n), de façon à former une passivation du matériau de la couche 112, le rendre photoconducteur et créer un contact sélectif pour les porteurs de charge. La face de la couche 118 opposée à celle en contact avec la couche 114 forme une première face 106 de l'échantillon 100. La face de la couche 116 opposée à celle en contact avec la couche 126 forme une deuxième face 107 de l'échantillon 100, correspondant à une face arrière de l'échantillon 100.

En variante, lorsque l'échantillon 100 comporte des couches similaires à celles d'une cellule photovoltaïque à pérovskite, la couche de matériau absorbeur 112 peut comporter un matériau à structure pérovskite et avoir une épaisseur par exemple comprise entre 200 nm et 5 $\mu$m. Les couches de passivation et couches sélectives de porteurs de charge seront celles qui sont adaptées au matériau pérovskite.

$N$ paires d'électrodes de mesure adjacentes, référencées 108.1 à 108.4 sur la figure 1, sont disposées sur la première face 106 de l'échantillon 100. Chacune de ces électrodes de mesure comprend par exemple un oxyde transparent conducteur 120, ou TCO (« Transparent Conductive Oxide » en anglais), correspondant par exemple à de l'ITO (« Indium Tin Oxide » en anglais, ou oxyde d'indium et d'étain) et dont l'épaisseur est par exemple égale à environ 100 nm, et une couche métallique 122 comprenant par exemple de l'argent et dont l'épaisseur est par exemple égale à environ 10 $\mu$m, la couche d'oxyde transparent conducteur étant disposée entre la couche métallique 122 et la couche 118. L'épaisseur de chaque électrode de mesure (dimension parallèle à l'axe Z de la figure 1) est par exemple comprise entre 100 nm et 50 $\mu$m.

Les $N$ paires d'électrodes de mesure adjacentes, avec $N$ nombre entier supérieur ou égal à 2 et par exemple compris entre 2 et 11, sont disposées sur la première face 106 de l'échantillon 100. Le nombre de paires d'électrodes réalisées sur l'échantillon 100 dépend notamment de la précision souhaitée pour la caractérisation électrique de l'échantillon 100. Plus le nombre de paires d'électrodes utilisées est important, plus la précision de l'extraction des paramètres électriques de l'échantillon 100 réalisée sera importante.

En variante, l'échantillon 100 peut comporter des couches de matériau différentes de celles décrites pour l'exemple ci-dessus, par exemple : absence des couches 116 et 118 ou des couches 114 et 126, remplacement des couches 114 et 126 de a-Si:H(i) par des couches de passivation différentes telles que des couches d'oxyde chimique ou thermique, recouvrement de la couche 116 par une couche de TCO, remplacement des couches de semi-conducteur amorphe par des couches nanocristallines ou microcristallines ou polycristallines de semi-conducteur, autre type de couche 112 semi-conducteur, etc.

Sur la figure 1, l'échantillon 100 comporte 4 paires d'électrodes de mesure adjacentes référencées 108.1, 108.2, 108.3 et 108.4 (soit $N$ = 4, N étant le nombre de paires d'électrodes de mesure adjacentes utilisées pour les mesures mises en oeuvre dans le procédé de caractérisation). Chacune des électrodes des paires d'électrodes de mesure adjacentes a une forme et des dimensions identiques aux autres électrodes, par exemple une forme rectangulaire. Chaque électrode a par exemple une longueur L (dimension parallèle à l'axe X) comprise entre quelques dizaines de microns et quelques mm, et une largeur W (dimension parallèle à l'axe Y) comprise entre (quelques mm et quelques dizaines de mm. A titre d'exemple, la largeur W de chacune des électrodes de mesure est égale à 15 mm, et la longueur L de chacune des électrodes de mesure est égale à 500 $\mu$m.

Les électrodes de mesure sont disposées parallèlement à leur largeur W (dimension parallèle à l'axe Y de la figure 1). De plus, les électrodes de mesure sont disposées les unes à côté des autres de manière à ce que chaque paire d'électrodes formée de deux électrodes adjacentes soient espacées d'une distance inter-électrodes qui varie d'une paire d'électrodes à l'autre. Ainsi, l'échantillon 100 comporte au moins 2 paires d'électrodes de mesure dont les distances inter-électrodes sont différentes l'une de l'autre.

Chaque électrode de mesure fait partie d'une ou de deux paires d'électrodes de mesure adjacentes. Sur l'exemple de la figure 1, l'une des électrodes de mesure de la paire d'électrodes 108.4 fait également partie de la paire d'électrodes de mesure 108.1, et l'autre des électrodes de mesure de la paire d'électrodes 108.4 fait également partie de la paire d'électrodes de mesure 108.2. Par contre, aucune des électrodes de mesure de la paire d'électrodes 108.3 ne fait partie d'une autre paire d'électrodes de mesure.

Sur l'exemple de la figure 1, en considérant la distance inter-électrodes $d_1$ de la paire d'électrodes 108.1, la distance inter-électrodes $d_2$ de la paire d'électrodes 108.2, la distance inter-électrodes $d_3$ de la paire d'électrodes 108.3, la distance inter-électrodes $d_4$ de la paire d'électrodes 108.4, ces distances sont indicées telles que $d_1 < d_2 < d_3 < d_4$, c'est-à-dire telles que $d_j < d_{j+1}$ avec $j$ nombre entier compris entre 1 et $N$-1.

Entre deux électrodes adjacentes d'une paire d'électrodes 108.i espacées de la distance $d_i$, la résistance

électrique $R^{paire}(d_i)$ mesurée aux bornes de ces deux électrodes a pour expression :

$$R^{paire}(d_i) = 2R_C + \frac{R_{Sh}}{W} * d_i$$

avec $R^{paire}(d_i)$ : résistance, en $\Omega$, mesurée entre les deux électrodes de la paire d'électrodes de mesure 108.i adjacentes espacées l'une de l'autre de la distance $d_i$;
$R_c$ : résistance de contact, en $\Omega$, entre une électrode de la paire d'électrodes 108.i et la couche de matériau absorbeur 112 ;
$R_{Sh}$ : résistance de couche, en $\Omega/\square$ (Ohm/carré).

En considérant l'exemple de la figure 1, l'hypothèse est faite que les couches de silicium amorphe 114, 116, 118, 126 présentent une très forte résistivité électrique transverse qui peut être considérée comme infinie. En considérant en outre que les électrodes de mesure sont des empilements de couches amorphes a-Si:H(i) 114, a-Si:H(n) 118, de TCO 120 et de métal 122 (par exemple de l'argent) et que le courant passe dans la structure uniquement dans le silicium cristallin de la couche 112, il est possible de considérer que :

- la résistance de contact $R_c$ inclut la contribution résistive des différentes couches de a-Si:H(i) 114, a-Si:H(n) 118, TCO 120 et métal 122 (argent dans l'exemple décrit ci-dessus) ainsi que la contribution des résistances de contact c-Si 112 / a-Si:H(i) 114 (résistance de contact entre la couche 112 et la couche 114 disposée du côté de la face avant de la couche 112), a-Si:H(i) / a-Si:H(n) (résistance de contact entre la couche 114 disposée du côté de la face avant de la couche 112 et la couche 118), a-Si:H(n) / TCO (résistance de contact entre la couche 118 et le TCO 120 des électrodes de mesure) et TCO / métal (résistance de contact entre le TCO 120 et le métal 122 des électrodes de mesure ), et
- la résistance de couche $R_{Sh}$ correspond à celle de la couche 112.

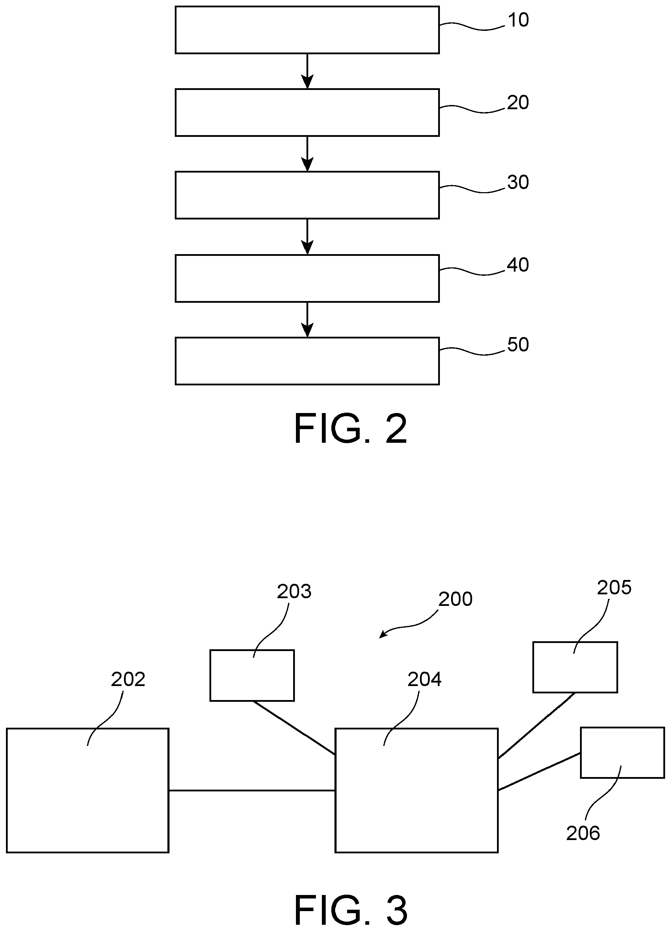

Un procédé de caractérisation électrique de l'échantillon photovoltaïque 100 est décrit ci-dessous. Les étapes de ce procédé sont représentées symboliquement sur la figure 2.

Tout d'abord, au cours d'une étape a) désignée par la référence 10 sur la figure 2, une valeur cible $d_s^{PL\,cible}$ de densité surfacique d'un signal de photoluminescence destiné à être émis depuis des régions de l'échantillon photovoltaïque 100 localisées entre les électrodes de mesure de chacune des N paires d'électrodes de mesure adjacentes 108.1-108.4 est calculée (à partir de données elles-mêmes choisies ou mesurées ou calculées) ou choisie.

Selon un premier exemple, la valeur cible $\Delta_p^{cible}$ peut être définie directement à partir d'une mesure d'une valeur $d_{s_i}^{PL}$ en illuminant la première face 106 ou la deuxième face 107 de l'échantillon 100 avec une lumière, par exemple émise par un simulateur solaire, dont les caractéristiques spectrales et l'intensité sont prédéterminées (par exemple une intensité et un spectre normalisés tel que AM 1,5, aussi appelé 1 soleil ou 1 sun). Les caractéristiques spectrales et l'intensité prédéterminées peuvent correspondre aux valeurs souhaitées pour lesquelles l'utilisateur souhaite caractériser le plus précisément possible l'échantillon 100. Le spectre de la lumière utilisée est choisi tel qu'il soit compatible avec une absorption lumineuse par la couche de matériau absorbeur 112. Une partie de ce spectre lumineux peut être absorbée par l'une ou plusieurs des couches situées entre la source lumineuse et la couche de matériau absorbeur 112.

En variante, la valeur cible $d_{s_i}^{PL}$ peut être prédéfinie, c'est-à-dire choisie par l'utilisateur dans une plage d'intérêt pour lui.

Selon un deuxième exemple, la valeur $d_s^{PL\,cible}$ est obtenue par calcul à partir d'une valeur $R_{sh}^{cible}$ de résistance de couche elle-même obtenue par méthode TLM en illuminant la première face 106 ou la deuxième face 107 de l'échantillon 100 avec une lumière, par exemple émise par un simulateur solaire, dont les caractéristiques spectrales et l'intensité sont prédéterminées (par exemple une intensité et un spectre normalisés tel que AM 1,5, aussi appelé 1 soleil ou 1 sun). Les caractéristiques spectrales et l'intensité prédéterminées peuvent correspondre aux valeurs souhaitées pour lesquelles l'utilisateur souhaite caractériser le plus précisément possible l'échantillon 100. Le spectre de la lumière utilisée est choisi tel qu'il soit compatible avec une absorption lumineuse par la couche de matériau absorbeur 112. Une partie de ce spectre lumineux peut être absorbée par l'une ou plusieurs des couches situées entre la source lumineuse et la couche de matériau absorbeur 112.

Pour la mise en oeuvre de la méthode TLM, il est par exemple possible de choisir les 2 paires d'électrodes de mesure adjacentes dont les caractéristiques se rapprochent le plus des électrodes de l'objet étudié (par exemple une cellule photovoltaïque) et dont l'échantillon 100 est représentatif, et/ou ayant les distances inter-électrodes les plus proches de celles des électrodes de l'objet étudié, et de mesurer les valeurs de résistance $R^{paire}(d_j)$ obtenues pour ces paires d'électrodes de mesure adjacentes. Une interpolation linéaire est réalisée ensuite à partir de la courbe définie par les valeurs de résistance $R^{paire}(d_j)$ mesurées. La valeur $R_{sh}^{cible}$ est alors calculée à partir de la pente $f$ de la droite obtenue à l'issue de l'interpolation linéaire réalisée, la pente $f$ de cette droite ayant pour expression $f = \dfrac{R_{Sh}^{cible}}{W}$ .

Selon une variante, la valeur $d_s^{PL\ cible}$ est obtenue par calcul à partir d'une valeur $R_{sh}^{cible}$ de résistance de couche prédéfinies ou choisies.

Selon une variante, la valeur $d_s^{PL\ cible}$ est obtenue par calcul à partir d'une valeur $\Delta_p^{cible}$ du taux d'injection de porteurs de charge dans la couche de matériau absorbeur choisie ou prédéterminée.

Selon un troisième exemple, la valeur $d_s^{PL\ cible}$ est obtenue par calcul partir d'une valeur $\Delta_p^{cible}$ du taux d'injection de porteurs de charge dans la couche de matériau absorbeur choisie ou prédéterminée.

Il est possible de déterminer $d_s^{PL\ cible}$ à partir de $R_{sh}^{cible}$ et de déterminer $R_{sh}^{cible}$ à partir de $\Delta_p^{cible}$ à l'aide des équations suivantes et dans les hypothèses suivantes.

En effet, à partir de cette valeur prédéterminée $\Delta_p^{cible}$, il est possible de déterminer la valeur $R_{sh}^{cible}$ qui est associée au taux d'injection de porteur de charge $\Delta p^{cible}$ par les deux équations suivantes :

$$\frac{1}{\rho^{cible}} \sim q\left(\mu_n\left(N_D + \Delta p^{cible}\right) + \mu_p.\Delta p^{cible}\right) \text{ et } R_{sh}^{cible} = \frac{\rho^{cible}}{e}$$

avec $\rho^{cible}$ correspondant à la résistivité électrique, en $\Omega$.cm, de la couche de matériau absorbeur ;
$q$ correspondant à la charge élémentaire, en C ;
$\mu_n$ correspondant à la mobilité des électrons dans le matériau absorbeur, en cm$^2$/(V.s) ;
$\mu_p$ correspondant à la mobilité des trous dans le matériau absorbeur, en cm$^2$/(V.s) ;
$N_D$ correspondant à la densité de porteurs de charge de type donneur à l'obscurité dans le matériau absorbeur, c'est-à-dire la concentration d'atomes dopants actifs dans le matériau absorbeur, en cm$^{-3}$ ;
$\Delta_p^{cible}$ correspondant à la valeur prédéterminée du taux d'injection de porteurs de charge cible dans la couche de matériau absorbeur, en cm$^{-3}$ ;
$R_{sh}^{cible}$ correspondant à la valeur cible de la résistance de couche de la couche de matériau absorbeur, en $\Omega/\square$ (Ohm/carré);
e correspondant à l'épaisseur de la couche équivalente, c'est-à-dire de la couche de matériau absorbeur, en cm.

Les valeurs des paramètres $\mu_n$, $\mu_p$ et $N_D$ du matériau absorbeur peuvent être obtenues à partir de données techniques connues selon le matériau absorbeur utilisé, ou peuvent être mesurées à l'aide d'instruments dédiés existants et connus de l'homme du métier. Par exemple, il est possible d'estimer la densité de porteurs de charge $N_D$ dans le matériau absorbeur de l'échantillon 100 en réalisant des mesures de la résistivité électrique $\rho$ de la couche de matériau d'absorbeur à l'obscurité, par exemple par une méthode 4 pointes ou par la mise en oeuvre d'une méthode TLM classique à partir de quelques paires d'électrodes de mesures adjacentes choisies (au moins 2 paires), et en utilisant ensuite l'équation suivante pour calculer la densité de porteur de charge $N_D$ à l'obscurité :

$$\rho = \frac{1}{q\left(\mu_n\ N_D + \mu_p\ N_A\right)}$$

avec q correspondant à la charge élémentaire, en C ;

$\mu_n$ correspondant à la mobilité des électrons dans le matériau absorbeur, en cm$^2$/(V.s) ;

$\mu_p$ correspondant à la mobilité des trous dans le matériau absorbeur, en cm$^2$/(V.s) ;

$N_D$ correspondant à la densité de porteurs de charge de type donneur à l'obscurité dans le matériau absorbeur, en cm$^{-3}$ ;

$N_A$ correspondant à la densité de porteurs de charge de type accepteur dans le matériau absorbeur, en cm$^{-3}$ (de valeur nulle dans le cas d'une couche de semi-conducteur de type n).

Dans le cas où la relation entre le taux d'injection de porteurs de charge $\Delta p^{cible}$ et l'intensité lumineuse avec laquelle l'échantillon 100 est illuminé est connue (cette relation pouvant être déterminée par des mesures sans contacts et par des calculs analytiques tenant compte de l'absorption lumineuse par l'échantillon), il est possible de définir directement une intensité lumineuse $I_i^{d_s^{PL\,cible}}$ permettant d'atteindre la valeur $\Delta p^{cible}$ et donc $R_{sh}^{cible}$ puis $d_s^{PL\,cible}$.

Par exemple, il est possible d'estimer la valeur de l'intensité lumineuse $I_i^{d_s^{PL\,cible}}$ à appliquer par le calcul pour obtenir le taux d'injection de porteurs de charge $\Delta p^{cible}$ cible à l'aide de la formule suivante :

$$I_i^{d_s^{PL\,cible}} = \frac{0,1\,q\,.\,e\,.\,\Delta p^{cible}}{J_{sc}\,.\,\tau_{eff}}$$

avec q correspondant à la charge élémentaire, en C ;

e correspondant à l'épaisseur de la couche équivalente, c'est-à-dire de la couche de matériau absorbeur, en cm ;

$\Delta_p^{cible}$ correspondant à la valeur prédéterminée du taux d'injection de porteurs de charge cible, en cm$^{-3}$ ;

$I_i^{d_s^{PL\,cible}}$ correspondant à l'intensité lumineuse, en sun, ou soleil, telle que 1 sun = 100 mW/cm$^2$ ;

$J_{SC}$ correspondant à la densité de courant de court-circuit, en A/cm$^2$ ;

$\tau_{eff}$ correspondant à la durée de vie des porteurs de charge, en seconde.

La valeur de $\tau_{eff}$ peut être obtenue par mesure avec un équipement commercialisé sous le nom de WCT-120 par la société Sinton Instruments, sur un échantillon ou une cellule équivalente à l'échantillon 100 en termes de passivation et de couches contribuant à la passivation et à l'absorption du spectre lumineux, et sans électrodes. La valeur de $J_{SC}$ peut être obtenue soit par une mesure I-V de performances de cellules photovoltaïque sous illumination d'intensité $I_i^{d_s^{PL\,cible}}$ sur un échantillon ou une cellule équivalente à l'échantillon 100 en termes de passivation et de couches contribuant à la passivation et à l'absorption lumineuse ou par l'intégration de la réponse spectrale mesurée sur la gamme spectrale du spectre lumineux incident.

En variante, il est possible de calculer la valeur cible $d_s^{PL\,cible}$ à partir d'une valeur du taux d'injection de porteurs de charge cible $\Delta_p^{cible}$ elle-même calculée à partir de signaux de photoluminescence mesurés sur l'échantillon 100.

En effet, la densité de signal de photoluminescence $d_{s_i}^{PL}$ émis depuis la région de l'échantillon photovoltaïque 100 localisée entre des électrodes de mesure adjacentes présentant la distance inter-électrodes $d_i$ peut s'exprimer par l'équation :

$$d_{s_i}^{PL} = K.n.p,$$

avec

K : constante optique dont la valeur dépend des propriétés de l'équipement d'illumination de l'échantillon photovoltaïque 100 utilisé et d'un équipement de mesure du signal de photoluminescence utilisé, ainsi que de l'échantillon photovoltaïque 100 (présence ou non de texturations, de couches antireflets, résolution de l'équipement, etc.) ;

n : la densité d'électrons libres, s'exprimant par l'équation $n = N_D + \Delta n$, avec $N_D$ correspondant à la densité de porteurs de charge de type donneur à l'obscurité dans le matériau absorbeur, en cm$^{-3}$, et $\Delta n$ correspondant à la densité d'électrons générés en excès sous lumière dans le matériau absorbeur ;

p : la densité de trous libres, s'exprimant par l'équation $p = N_A + \Delta p$, avec $N_A$ correspondant à la densité de porteurs de charge de type accepteur dans le matériau absorbeur, en cm$^{-3}$, et de valeur nulle dans le cas d'une couche de semi-conducteur de type n, et $\Delta p$ correspondant à la densité d'électrons générés en excès sous lumière dans le matériau absorbeur.

Lorsque le matériau absorbeur de l'échantillon photovoltaïque 100 est un semi-conducteur de type n, et en illuminant l'échantillon photovoltaïque dans une gamme d'excitation lumineuse telle que $\Delta n = \Delta p$, la densité de signal de photoluminescence $d_{s_i}^{PL}$ mesurée peut donc s'exprimer par l'équation :

$$d_{s_i\ i}^{PL} = K.(N_D + \Delta p).\Delta p$$

Pour un échantillon 100 et des équipements d'illumination et de mesure donnés, les valeurs de $K$ et de $N_D$ sont constantes. Les mesures de photoluminescence de l'échantillon peuvent donc être vues comme des mesures du paramètre $\Delta p$ dans le matériau absorbeur et qui affectent directement la valeur de la résistance de couche de la couche de matériau absorbeur. Si la valeur mesurée $d_s^{PL\ cible}$ est constante d'un pixel à l'autre ou d'un groupe de pixels à l'autre du spécimen de mesure, cela signifie donc que la valeur du paramètre $\Delta p$ est constante pour ces pixels ou ces différents groupes de pixel.

La valeur $d_{s_i}^{PL}$ de densité surfacique du signal de photoluminescence émis depuis la région de l'échantillon photovoltaïque localisée entre les électrodes de mesure adjacentes présentant la distance inter-électrodes $d_i$, peut être définie comme la somme du signal photoluminescent mesurée sur la surface d'intérêt qui correspond la surface égale à la largeur des électrodes (côté parallèle des électrodes 2 à 2) multipliée par la distance inter-électrode $d_i$.

La valeur cible $d_s^{PL\ cible}$ peut être calculée à partir de la valeur de $N_D$, de la constante $K$ et de la valeur cible $\Delta_p^{cible}$. Dans ce cas, la valeur de $N_D$ peut être obtenue par une mesure 4 pointes ou TLM à l'obscurité. La valeur de K peut être déterminée par une calibration du système de mesure par photoluminescence pour chaque type d'échantillon photovoltaïque (la constante K dépend de la transmission de la lumière jusqu'au matériau absorbeur).

Après avoir calculé ou choisi la valeur cible $d_s^{PL\ cible}$, pour chacune des N paires d'électrodes de mesure adjacentes présentant les distances inter-électrodes $d_i$, avec $i$ nombre entier compris entre 1 et $N$, une valeur $I_i^{d_s^{PL\ cible}}$ d'une intensité lumineuse, pour le spectre $S^{PL}$ illuminant la première face 106 ou la deuxième face 107 de l'échantillon photovoltaïque 100, est déterminée, telle qu'une valeur $d_{s_i}^{PL}$ de densité surfacique d'un signal de photoluminescence émis depuis la région de l'échantillon photovoltaïque 100 localisée entre les électrodes de mesure adjacentes présentant la distance inter-électrodes $d_i$, soit la plus proche possible de la valeur cible $d_s^{PL\ cible}$ (étape b) désignée par la référence 20 sur la figure 2).

Dans l'échantillon 100, pour une même illumination, la résistance de couche diffère et la densité surfacique de signal photoluminescent $d_s^{PL}$ entre deux paires différentes d'électrodes de mesure adjacentes en raison de la quantité d'illumination, d'ombrages et réflexions de l'illumination des motifs des électrodes de mesure qui varie en fonction de la distance inter-électrodes et modifie le taux d'injection de porteurs photo-générés en fonction de cette distance inter-électrode. Les paires d'électrodes de mesure adjacentes ayant les distances inter-électrodes les plus proches ont donc les valeurs de résistance de couche et de densité surfacique de signal photoluminescent $d_s^{PL}$ les plus proches pour une même illumination.

Dans ce procédé, les valeurs des résistances électriques entre les électrodes des paires d'électrodes de mesure adjacentes, notée $R^{paire}(d_i)$ pour une paire d'électrodes de mesure adjacentes de distance inter-électrodes $d_i$, sont mesurées à l'aide d'équipements de mesure électrique de type SMU (unité de source et de mesure) avantageusement par une méthode 4 fils (4W). Sur la figure 1, les flèches désignées par la référence 124 représentent symboliquement les pointes de mesure appliquées sur les électrodes lorsque les résistances des différentes paires d'électrodes sont mesurées par une méthode 4 fils (4W).

La détermination des valeurs $I_i^{d_s^{PL\,cible}}$ pour lesquelles les valeurs de $d_{s_i}^{PL}$ sont le plus proche possible de $d_s^{PL\,cible}$ permet d'appliquer, pour chacune des $N$ paires d'électrodes de mesure adjacentes, l'illumination de l'échantillon avec les intensités lumineuse $I_i^{d_s^{PL\,cible}}$ conduisant à l'obtention d'une valeur de densité surfacique de signal de photoluminescence de la couche de matériau absorbeur qui soit la plus proche possible de $d_s^{PL\,cible}$. Ces valeurs d'intensité lumineuse $I_i^{d_s^{PL\,cible}}$ peuvent être obtenues par différentes méthodes, par exemple par essais successifs ou avec un balayage des différentes valeurs possibles de l'illumination (avantageusement un balayage avec un pas le plus fin possible pour plus de précision).

Une autre façon de procédé pour déterminer l'ensemble des valeurs d'intensité lumineuse $I_i^{d_s^{PL\,cible}}$ pour lesquelles les valeurs de $d_{s_i}^{PL}$ sont le plus proche possible de $d_s^{PL\,cible}$ est de réaliser une cartographie, avec le spectre $S^{PL}$ mais sous illumination d'intensité $I_{carto}$, de la densité surfacique de photoluminescence (image PL) de l'échantillon 100. Ces mesures permettent d'obtenir les densités surfaciques de signal de photoluminescence $d_{s_i}^{PL}$ ($I_{carto}$) entre les différentes paires d'électrodes de mesure pour l'intensité lumineuse $I_{carto}$. Il est alors possible de calculer les différentes valeurs de $I_i^{d_s^{PL\,cible}}$ pour lesquelles les valeurs de $d_{s_i}^{PL}$ sont le plus proche possible de $d_s^{PL\,cible}$ avec la formule suivante :

$$\frac{d_{s_i}^{PL}(I_{carto})}{I_{carto}} = \frac{d_s^{PL\,cible}}{I_i^{d_s^{PL\,cible}}}$$

Ensuite, au cours d'une étape c) désignée par la référence 30 sur la figure 2, pour chacune des $N$ paires d'électrodes de mesure adjacentes, de distance inter-électrodes $d_i$, la résistance électrique $R_{d_s^{PL\,cible}}^{paire}$ ($d_i$) entre les électrodes de mesure adjacentes présentant la distance inter-électrodes $d_i$ est mesurée pendant une illumination de l'échantillon photovoltaïque 100 avec le spectre $S^{PL}$ appliqué avec l'intensité lumineuse $I_i^{d_s^{PL\,cible}}$.

Au cours d'une étape d) désignée par la référence 40 sur la figure 2, la valeur $R_{Sh}$ de la résistance de couche de la couche de matériau absorbeur et la valeur $R_c$ de la résistance de contact des électrodes avec la couche de matériau absorbeur sont ensuite déterminées par interpolation linéaire entre au moins deux des valeurs $R_{d_s^{PL\,cible}}^{paire}$ ($d_i$) mesurées à l'étape c). La valeur $R_{Sh}$ est calculée en déterminant la pente $f$ de la droite obtenue par cette interpolation linéaire et en utilisant l'équation $f = \frac{R_{Sh}}{W}$, et la valeur $R_c$ est obtenue à partir de la valeur d'ordonnée à l'intersection de la droite obtenue par cette interpolation linéaire avec l'axe des ordonnées qui est égale à $2.R_c$.

De manière générale, la courbe à partir de laquelle cette interpolation linéaire est mise en oeuvre peut correspondre à celle tracée à partir de tout ou partie des valeurs $R^{paire}_{d^{PL\,cible}_s}$ ($d_i$) mesurées pour les paires d'électrodes de mesure adjacentes utilisées lorsque l'échantillon 100 est illuminé avec les différentes valeurs d'intensité lumineuse $I^{d^{PL\,cible}_s}_i$ associées et le spectre $S^{PL}$.

A partir des valeurs de $R_{Sh}$ et $R_c$ déterminées, il est possible de déterminer, au cours d'une étape e) portant la référence 50 sur la figure 2, la résistivité de contact spécifique $\rho_C$ et la longueur de transfert $L_T$ de la couche de matériau absorbeur, qui s'obtiennent en résolvant le système d'équations suivant :

$$R_C = \frac{R_{Sh} L_T}{W} \coth\left(\frac{L}{L_T}\right)$$

$$\rho_C = R_{Sh}.L_T^2$$

avec $L_T$ correspondant à la distance de transfert, en cm, et

$\rho_C$ correspondant à la résistivité de contact spécifique, en $\Omega.cm^2$.

En variante du procédé précédemment décrit, au cours des différentes étapes, il est possible d'illuminer la deuxième face 107, opposée à la première face 106, de l'échantillon photovoltaïque 100.

Dans le procédé précédemment décrit, les mesures de signal de photoluminescence sont mises en oeuvre par un dispositif de mesure de photoluminescence configuré pour mesurer un signal de photoluminescence émis depuis l'échantillon photovoltaïque 100 et positionné du côté de l'une des faces 106, 107 de l'échantillon photovoltaïque 100. Lorsque le dispositif de mesure de photoluminescence est positionné du côté de la face avant 106, les espacements entre les électrodes de mesure présentes sur la face avant 106 sont bien visibles sur les images de photoluminescence mesurées. Lorsque le dispositif de mesure de photoluminescence est positionné du côté de la face arrière 107, les espacements entre les électrodes de mesure présentes sur la face avant 106 ne sont quasiment pas visibles sur les images de photoluminescence mesurées et il convient donc de localiser et tenir compte de ces électrodes lors du traitement des images obtenues pour calculer la densité surfacique de signal photoluminescent $d^{PL}_{s_i}$

Quel que soit le mode de réalisation ou la variante envisagée, l'illumination de l'échantillon photovoltaïque peut être réalisée sur la première face 106 ou sur la deuxième face 107 de l'échantillon. De même, les mesures de signal de photoluminescence peuvent être réalisées depuis la première face 106 ou la deuxième face 107 de l'échantillon (indépendamment de la face illuminée). Cependant si des mesures de photoluminescence sont réalisées dans l'étape a) alors la face depuis laquelle les mesures de photoluminescence sont réalisées reste inchangée pour les étapes a) et b). La face illuminée est inchangée lors des étapes b) et c) du procédé de caractérisation.

La figure 3 représente schématiquement un dispositif de caractérisation 200 d'un échantillon photovoltaïque 100 utilisé pour mettre en oeuvre le procédé de caractérisation précédemment décrit.

Le dispositif 200 comporte un dispositif 202 de mesure I-V sous illumination permettant de réaliser les différentes mesures de résistances des paires d'électrodes de mesure précédemment décrites, par exemple une unité de source et de mesure SMU.

Le dispositif 200 comporte également un dispositif d'illumination d'intensité variable 203 correspondant par exemple à un simulateur solaire.

Le dispositif 200 comporte également un dispositif de mesure de signal de photoluminescence 205 configuré pour mesurer les signaux de photoluminescence émis par l'échantillon photovoltaïque 100 lorsque celui-ci est illuminé.

De manière avantageuse, le dispositif 200 comporte également un deuxième dispositif d'illumination d'intensité variable 206, distinct du dispositif d'illumination d'intensité variable 203 et destiné à illuminer l'échantillon photovoltaïque 100 avec une source lumineuse adaptée pour maximiser les signaux de photoluminescence qui seront émis par l'échantillon photovoltaïque 100 lors de son illumination, par exemple une source laser configurée pour émettre une lumière dont la longueur d'onde maximise le phénomène de photoluminescence de l'échantillon photovoltaïque 100.

Le dispositif 200 comporte également une unité de calcul 204, par exemple un ordinateur, permettant de traiter les différents résultats de mesure et de réaliser les calculs du procédé de caractérisation précédemment décrit. Cette unité de calcul 204 peut également servir au pilotage des dispositifs d'illumination 203, 206.

**Revendications**

1. Procédé de caractérisation électrique d'un échantillon photovoltaïque (100) comprenant au moins un empilement de couches (112, 114, 116, 118, 126) incluant une couche de matériau absorbeur (112) et des électrodes de mesure de forme et de dimension identiques et disposées sur une première face (106) de l'échantillon photovoltaïque (100) et formant $N$ paires d'électrodes de mesure adjacentes (108.1 - 108.4) présentant des distances inter-électrodes $d_1$ - $d_N$ différentes les unes des autres, avec N nombre entier supérieur ou égal à 2, les électrodes de mesure d'une même paire d'électrodes de mesure adjacentes (108.1 - 108.4) étant parallèles l'une par rapport à l'autre, **caractérisé en ce qu**'il comprend au moins :

   a) définition ou calcul (10) d'une valeur cible $d_s^{PL\ cible}$ de densité surfacique d'un signal de photoluminescence destiné à être émis depuis des régions de l'échantillon photovoltaïque (100) localisées entre les électrodes de mesure de chacune des $N$ paires d'électrodes de mesure adjacentes (108.1 - 108.4) ;

   b) pour chacune des N paires d'électrodes de mesure adjacentes (108.1 - 108.4), de distances inter-électrodes $d_i$, avec $i$ un nombre entier compris entre 1 et $N$, détermination (20) d'une valeur $I_i^{d_s^{PL\ cible}}$ d'une intensité lumineuse, pour un spectre donné $S^{PL}$ illuminant une face, correspondant à la première face (106) de l'échantillon photovoltaïque (100) ou à une deuxième face (107), opposée à la première face, de l'échantillon photovoltaïque (100), telle qu'une valeur $d_{s_i}^{PL}$ de densité surfacique d'un signal de photoluminescence émis depuis la région de l'échantillon photovoltaïque (100) localisée entre les électrodes de mesure adjacentes présentant la distance inter-électrodes $d_i$, soit la plus proche possible de la valeur cible $d_s^{PL\ cible}$ ;

   c) pour chacune des $N$ paires d'électrodes de mesure adjacentes (108.1 - 108.4), de distance inter-électrodes $d_i$, mesure (30) d'une résistance électrique $R_{d_s^{PL\ cible}}^{paire}$ ($d_i$) entre les électrodes de mesure adjacentes présentant la distance inter-électrodes $d_i$, pendant une illumination de ladite face de l'échantillon photovoltaïque (100) avec le spectre $S^{PL}$ appliqué avec l'intensité lumineuse $I_i^{d_s^{PL\ cible}}$ ;

   d) détermination (40) d'une valeur $R_{Sh}$ de résistance de couche de la couche de matériau absorbeur (112) et d'une valeur $R_c$ de résistance de contact d'une des électrodes de mesure avec la couche de matériau absorbeur (112), par interpolation linéaire entre au moins deux des valeurs $R_{d_s^{PL\ cible}}^{paire}$ ($d_i$) mesurées à l'étape c).

2. Procédé selon la revendication 1, dans lequel la valeur cible $d_s^{PL\ cible}$ est calculée à partir d'une valeur cible $R_{sh}^{cible}$ de résistance de couche de la couche de matériau absorbeur (112) ou d'une valeur cible $\Delta p^{cible}$ d'un taux d'injection de porteurs de charge dans la couche de matériau absorbeur (112).

3. Procédé selon la revendication 2, dans lequel la valeur $R_{sh}^{cible}$ est calculée par méthode TLM en illuminant ladite première face (106) de l'échantillon photovoltaïque (100) avec une lumière dont les caractéristiques spectrales et l'intensité sont prédéterminées, ou dans lequel la valeur $R_{sh}^{cible}$ est prédéfinie.

4. Procédé selon la revendication 2, dans lequel la valeur $R_{sh}^{cible}$ est obtenue par calcul à partir de la valeur cible $\Delta_p^{cible}$.

5. Procédé selon la revendication 1, dans lequel la valeur cible $d_s^{PL\ cible}$ est définie à partir d'une mesure de photoluminescence d'une valeur $d_{s_i}^{PL}$ en illuminant l'échantillon photovoltaïque (100) avec une lumière dont les caractéristiques spectrales et l'intensité sont prédéterminées ; l'illumination de l'échantillon photovoltaïque et la mesure de photoluminescence sont réalisées sur ladite première face.

6.

Procédé selon la revendication 1, dans lequel la valeur cible $d_s^{PL\ cible}$ est prédéfinie.

7. Procédé selon l'une des revendications précédentes, dans lequel l'étape b) est mise en oeuvre :

- en réalisant une cartographie, avec le spectre $S^{PL}$ et sous une illumination d'intensité $I_{carto}$, de la densité surfacique de signal de photoluminescence $d_{s_i}^{PL}$ ($I_{carto}$) de l'échantillon photovoltaïque (100) entre chacune des $N$ paires d'électrodes de mesure adjacentes (108.1 - 108.4), et en calculant les différentes valeurs de $I_i^{d_s^{PL\ cible}}$ permettant d'obtenir la même valeur $d_s^{PL\ cible}$ entre chaque paire d'électrode telle que

$$\frac{d_{s_i}^{PL}(I_{carto})}{I_{carto}} = \frac{d_s^{PL\ cible}}{I_i^{d_s^{PL\ cible}}} \quad ;$$

ou

- par essais successifs ou avec un balayage de différentes valeurs possibles de $I_i^{d_s^{PL\ cible}}$.

8. Procédé selon l'une des revendications précédentes, comportant en outre une étape e) de détermination de valeurs de la résistivité de contact spécifique $\rho_c$ et de la longueur de transfert $L_T$ de la couche de matériau absorbeur (112) à partir des valeurs déterminées $R_{Sh}$ de résistance de couche de la couche de matériau absorbeur (112) et $R_c$ de résistance de contact d'une des électrodes de mesure avec la couche de matériau absorbeur (112).

9. Procédé selon l'une des revendications précédentes, dans lequel la couche de matériau absorbeur (112) comporte une couche de semi-conducteur cristallin, l'empilement de couches comprenant en outre au moins deux couches de semi-conducteur amorphe (114, 116, 118, 126) entre lesquelles la couche de matériau absorbeur (112) est disposée.

10. Procédé selon l'une des revendications précédentes, dans lequel chacune des électrodes de mesure comporte une portion de métal (122) disposée sur une portion d'oxyde transparent conducteur (120).

11. Dispositif (200) de caractérisation électrique d'un échantillon photovoltaïque (100) comprenant au moins un empilement de couches (112, 114, 116, 118, 126) incluant une couche de matériau absorbeur (112) et des électrodes de mesure de forme et de dimension identiques et disposées sur une première face (106) de l'échantillon photovoltaïque (100) et formant $N$ paires d'électrodes de mesure adjacentes (108.1 - 108.4) présentant des distances inter-électrodes $d_1$ - $d_N$ différentes les unes des autres, avec $N$ nombre entier supérieur ou égal à 2, les électrodes de mesure d'une même paire d'électrodes de mesure adjacentes (108.1 - 108.4) étant parallèles l'une par rapport à l'autre, configuré pour mettre en oeuvre un procédé de caractérisation selon l'une des revendications précédentes.

FIG. 1

EP 4 475 430 A2

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE L. BASSET et al.** In depth analysis oftransfer length method application on passivated contacts under illumination. *Solar Energy Materials and Solar Cells,* Février 2021, vol. 230, 2021